# EUROPÄISCHE PATENTANMELDUNG

(11) **EP 4 653 378 A1**
(43) Veröffentlichungstag der Anmeldung: **26.11.2025**
(21) Anmeldenummer: 25176940.2
(22) Anmeldetag: 16.05.2025
(51) Int. Cl.: B66F 9/075, B66F 9/12, B66F 9/24

(54) **VERFAHREN ZUR BESTIMMUNG DER POSE EINER PALETTE RELATIV ZU EINEM FLURFÖRDERZEUG UND FLURFÖRDERZEUG**

(30) Priorität: 22.05.2024 DE 102024114325
(71) Anmelder: Jungheinrich AG, 22047 Hamburg (DE)
(72) Erfinder: Flottran, Dennis, 23881 Breitenfelde (DE); Fränkel, Maximilian, 06193 Wettin-Löbejün (DE); Niermann, Heiko, 84030 Ergolding (DE); Hofmann, Peter, 22041 Hamburg (DE); Meinzer, Dominik, 81929 München (DE)
(74) Vertreter: Hauck Patent- und Rechtsanwälte PartmbB

(57) **Zusammenfassung**

Verfahren zur Bestimmung der Pose einer Palette relativ zu einem Flurförderzeug, das ein Gabelzinkenpaar mit einer ersten sowie zweiten Gabelzinke und ein erstes Abstandsmessmittel aufweist, das im Bereich einer Gabelspitze an der ersten Gabelzinke angeordnet sowie bevorzugt auf einen Gabelzwischenraum gerichtet ist, wobei die Palette einen äußeren Block, äußeren Steg, Mittelblock oder -steg aufweist,
gekennzeichnet durch die Schritte
• Einfahren des Flurförderzeugs in die Palette, sodass die erste sowie zweite Gabelzinke in die Palette eintauchen,
• Ermitteln von mehreren ersten Abstandsmesswerten mit dem ersten Abstandsmessmittel zu dem äußeren Block, äußeren Steg, Mittelblock oder -steg der Palette während der Einfahrt,
• Berechnen eines Versatzmaßes aus mindestens einem ersten Abstandsmesswert und/oder eines Schrägstellungsmaßes aus der Differenz von mindestens zwei ersten Abstandsmesswerten.

## Beschreibung

Die Erfindung betrifft ein Verfahren zur Bestimmung der Pose einer Palette relativ zu einem Flurförderzeug sowie ein Flurförderzeug.

Flurförderzeuge können dazu eingesetzt werden, Paletten mit Gabelzinken aufzunehmen. Dazu wird im Rahmen eines Einfahrvorgangs ein Flurförderzeug so relativ zu einer Palette bewegt, dass Gabelzinken des Flurförderzeugs in die Palette auftauchen, sodass nach dem Einfahrvorgang ein Mittelblock oder -steg der Palette zwischen den Gabelzinken oder ein äußerer Block oder äußerer Steg neben einer der Gabelzinken angeordnet ist. Anschließend können die Gabelzinken mit der Palette angehoben und das Flurförderzeug zusammen mit der Palette bewegt werden. Um während des Hochhebens und der anschließenden Fahrt eine hohe Sicherheit zu gewährleisten, sollte eine Palette möglichst mittig auf den Gabelzinken aufliegen und auch nicht gegenüber den Gabelzinken verdreht sein. Andernfalls könnte eine ungünstige Lastverteilung vorliegen, die die Betriebssicherheit, insbesondere die Kippstabilität, des Flurförderzeug gefährden kann. Hierbei kann es bei autonom oder automatisch geführten Fahrzeugen für einen prozesssicheren Betrieb auch notwendig sein, dass die Positionsbestimmung redundant ausgeführt wird.

Zudem ist es wünschenswert für eine möglichst reproduzierbare Aufnahme und Abgabe von Paletten mittels autonomer oder automatisierter Flurförderzeuge, wenn die Palette sich möglichst mittig auf den Lastgabeln befindet, da hierdurch die Position der Palette nach dem Transport und dem Abstellen durch das Flurförderzeug möglichst gut bestimmt und so die Palettenposition nach dem Abstellen beispielsweise durch ein weiteres autonomes oder automatisiertes Flurförderzeug optimal angefahren werden kann.

Ausgehend hiervon liegt der Erfindung die Aufgabe zugrunde, einen sicheren Betrieb eines Flurförderzeugs während der Handhabung von Paletten zu gewährleisten.

Die Aufgabe wird durch ein Verfahren nach Anspruch 1 und ein Flurförderzeug nach Anspruch 11 gelöst. Vorteilhafte Ausführungsarten sind der Gegenstand der abhängigen Ansprüche und der folgenden Beschreibung.

Das erfindungsgemäße Verfahren dient der Bestimmung der Pose einer Palette relativ zu einem Flurförderzeug, wobei eine Pose durch eine Position und eine Orientierung gekennzeichnet ist. Mit anderen Worten dient das Verfahren dazu, den Abstand der Palette zu dem Flurförderzeug sowie einen Unterschied in der Orientierung zwischen Flurförderzeug und Palette zu bestimmen.

Das Flurförderzeug weist ein Gabelzinkenpaar mit einer ersten und einer zweiten Gabelzinke auf. Im Bereich einer Spitze der ersten Gabelzinke ist ein erstes Abstandsmessmittel angeordnet, das bevorzugt auf einen Gabelzwischenraum gerichtet ist.

Im Zuge des Verfahrens wird das Flurförderzeug in die Palette eingefahren. Dazu wird es relativ zu der Palette bewegt, sodass die Gabelzinken, die zu Beginn frei von der Palette sind, zunehmend immer weiter in die Palette eintauchen, bis die Palette schließlich vollständig auf den Gabelzinken angeordnet ist. Die Palette verfügt über einen äußeren Block, äußeren Steg, Mittelblock oder -steg, der bevorzugt unterhalb einer Palettenoberseite angeordnet sein kann, die zur Aufnahme einer Last ausgebildet ist. Dabei kann der Beginn eines Einfahrvorgang im Sinne der Erfindung insbesondere durch den Zeitpunkt gekennzeichnet sein, ab dem der äußere Block, äußere Steg neben den Gabelzinken oder der Mittelblock oder -steg der Palette zwischen den Gabelzinken angeordnet ist.

Während der Einfahrt werden mehrere Abstandsmesswerte mit dem ersten Abstandsmessmittel gemessen. Diese repräsentieren den Abstand zwischen dem ersten Abstandmessmittel und dem äußeren Block, äußeren Steg, Mittelblock oder - steg, sofern der äußere Block oder äußern Steg neben der ersten Gabelzinke oder der Mittelblock oder -steg zwischen dem ersten Abstandsmessmittel und der gegenüberliegenden zweiten Gabelzinke angeordnet ist, oder ansonsten den Abstand zum nächsten Gegenstand in einer Umgebung des Flurförderzeuges oder den Abstand zwischen dem ersten Abstandsmessmittel und der gegenüberliegenden, zweiten Gabelzinke.

Nachdem mehrere erste Abstandsmesswerte gemessen wurden, werden ein Versatzmaß und/oder ein Schrägstellungsmaß berechnet. Das Versatzmaß wird aus mindestens einem ersten Abstandsmesswert berechnet. Wenn nur ein erster Abstandsmesswert zur Berechnung verwendet wird, entspricht das Versatzmaß diesem ersten Abstandsmesswert. Wenn mehrere erste Abstandsmesswerte verwendet werden, kann das Versatzmaß einem der ersten Abstandswerte, ihrer Summe, dem arithmetischen Mittelwert oder dem Median entsprechen. Das Versatzmaß erlaubt Rückschluss darauf, ob die Palette mittig auf den Gabelzinken platziert wurde. Die Berechnung kann noch während des Einfahrens oder danach stattfinden.

Zur Berechnung des Schrägstellungsmaßes wird die Differenz zwischen mindestens zwei ersten Abstandsmesswerten berechnet. Wenn die Palette relativ zu den Gabelzinken eine Schrägstellung aufweist, nimmt der Abstand des Mittelblocks oder -stegs zu dem ersten Abstandsmessmittels immer weiter ab oder zu. Das Vorliegen einer Differenz zwischen zwei ersten Abstandsmesswerten erlaubt daher Rückschluss darauf, dass eine Schrägstellung vorliegt. Sofern mehrere erste Abstandsmesswerte verwendet werden, werden jeweils die Differenzen zwischen zwei zeitlich nacheinander gemessenen ersten Abstandsmesswerten berechnet. Anschließend kann das Schrägstellungsmaß berechnet werden, indem der arithmetische Mittelwert oder Median der mehreren Differenzen berechnet wird, wobei dann der Mittelwert bzw. Median dem Schrägstellungsmaß entspricht. Das Schrägstellungsmaß gibt an, ob die Palette relativ zu den Gabelzinken eine Schrägstellung aufweist.

Sofern der äußere Block, äußere Steg, Mittelblock oder -steg sich nicht vollständig oder nicht ununterbrochen über eine Länge der Palette erstreckt, führt dies auch bei einem kontinuierlichen Einfahrvorgang, bei dem der Abstand zwischen Palette und Flurförderzeug kontinuierlich abnimmt, dazu, dass verhältnismäßige große Abweichungen zwischen ersten Abstandsmesswerten auftreten können. Diese Abweichungen entstehen, wenn das erste Abstandsmessmittel nicht mehr den Abstand zwischen dem ersten Abstandsmessmittel und dem äußeren Block, äußeren Steg, Mittelblock oder -steg, sondern den Abstand zu der Umgebung oder der gegenüberliegenden Gabelzinke misst. Somit entsprechen die Abweichungen dem Abstand zwischen der dem ersten Abstandsmessmittel zugewandten Seite des Mittelblocks oder -stegs und der dem Abstandsmessmittel gegenüberliegenden Gabelzinke, also mindestens der Dicke des Mittelblocks oder -stegs. Dann werden nur erste Abstandmesswerte für das Berechnen des Versatzmaßes und/oder Schrägstellungsmaßes verwendet, die gemessen wurden, während sich der Mittelblock oder -steg zwischen erstem Abstandsmessmittel und zweiter Gabelzinke befand. Dies kann bestimmt werden, indem die ersten Abstandsmesswerte miteinander verglichen werden und nur solche für die Berechnung verwendet werden, die keine Abweichungen aufweisen, die mindestens der Dicke des Mittelblock oder - stegs entsprechen.

Das Versatzmaß und/oder das Schrägstellungsmaß erlauben Rückschluss darauf, ob die Palette versetzt gegenüber den Gabelzinken angeordnet ist oder gegenüber diesen verdreht ist. Beides ist, wie eingangs erläutert, der Betriebssicherheit abträglich.

Sobald ein Versatzmaß und/oder Schrägstellungsmaß ermittelt wurde, das zu groß ist, kann eine entsprechende Entscheidung getroffen und beispielsweise das Flurförderzeug wieder aus der Palette ausgefahren werden oder das Anheben der Gabelzinken verhindert werden. Das Bereitstellen des Versatzmaßes und/oder Schrägstellungmaßes erlaubt somit durch die Anwendung des Verfahrens, die Betriebssicherheit eines entsprechenden Flurförderzeugs zu steigern.

Bevorzugt werden daher in zusätzlichen Verfahrensschritten ein ermitteltes Versatzmaß und/oder Schrägstellungsmaß mit einem Schwellwert verglichen und, sofern der Schwellwert überschritten ist, wird das Flurförderzeug wieder aus der Palette ausgefahren, das Flurförderzeug gestoppt oder das Anheben der Gabelzinken verhindert.

Ferner gilt, dass eine Anordnung, bei der das erste Abstandsmessmittel auf den Gabelzwischenraum angeordnet ist, dafür sorgt, dass das erste Abstandsmessmittel besser geschützt ist und auch eine Anfälligkeit für Störeinflüsse gesenkt ist. Ein nach außen gerichtetes Abstandsmessmittel erlaubt die Durchführung des Verfahrens auch bei Paletten ohne Mittelblock oder -steg.

Bei einer Ausführungsart des erfindungsgemäßen Verfahrens weist das Flurförderzeug ein gelenktes Rad sowie einen Antriebsmotor auf. Der Antriebsmotor treibt das gelenkte Rad an, sodass mit diesem das Flurförderzeug sowohl gelenkt als auch bewegt werden kann. In einem zusätzlichen Verfahrensschritt wird auf Grundlage des Versatzmaßes und/oder des Schrägstellungsmaßes ein Lenkwinkel des gelenkten Rads und/oder eine Ansteuerung des Antriebsmotors verändert. Es ist auf diese Art eine Korrektur möglich, sodass am Ende des Einfahrvorgangs die Palette sowohl mittig auf den Gabelzinken platziert als auch gerade zu diesen ausgerichtet ist. Bevorzugt werden bei dieser Ausführungsart daher die ersten Abstandsmesswerte vor Abschluss des Einfahrvorgangs gemessen und das Versatzmaß und/oder das Schrägstellungsmaß ebenfalls vor dem Abschluss des Einfahrvorgangs berechnet.

Bei einer Ausführungsart der Erfindung weist das Flurförderzeug ein zweites Abstandsmessmittel auf, das im Bereich einer Gabelspitze der zweiten Gabelzinke angeordnet sowie bevorzugt auf den Gabelzwischenraum oder nach außen gerichtet ist. In einem zusätzlichen Verfahrensschritt werden mit dem zweiten Abstandsmessmittel mehrere Abstandsmesswerte gemessen, die den Abstand eines weiteren äußeren Blocks oder äußeren Stegs der Palette zum zweiten Abstandsmessmittel oder des Mittelbocks oder -stegs der Palette zu dem zweiten Abstandsmessmittel angeben. Es werden also auch bei dieser Ausführungsart nur solche zweiten Abstandsmesswerte verwendet, die ermittelt werden, wenn das zweite Abstandsmessmittel neben dem weiteren äußeren Block oder äußeren Steg oder zwischen dem zweiten Abstandsmessmittel und der ersten Gabelzinke der Mittelblock oder -steg angeordnet ist.

Die zweiten Abstandsmesswerte werden bei der Berechnung des Versatzmaßes und/oder Schrägstellungsmaßes verwendet. Zur Berechnung des Versatzmaßes kann ein zweiter Abstandsmesswert verwendet werden. Es können auch die zweiten Abstandsmesswerte betragsmäßig zu den ersten Abstandsmesswerten addiert werden oder es wird ein Mittelwert aus den Beträgen der ersten und zweiten Abstandsmesswerte berechnet. Zur Berechnung des Schrägstellungsmaßes werden so wie auch bei den ersten Abstandsmesswerte die Differenzen zwischen aufeinander folgende zweite Abstandsmesswerte berechnet. Die Differenz oder die Differenzen können anschließend alleine oder zusammen mit den aus den ersten Abstandsmesswerten berechneten Differenzen verwendet werden, um das Schrägstellungsmaß zu berechnen, wobei bspw. eine Addition oder Mittelwertbildung vorgenommen werden kann.

Durch die Verwendung von zweiten Abstandsmesswerten stehen zur Berechnung des Versatzmaßes und/oder Schrägstellungsmaßes mehr Informationen zur Verfügung als dies der Fall ist, wenn nur erste Abstandsmesswerte verwendet werden. Durch die so gesteigerte Informationsmenge kann die Genauigkeit bei der Berechnung des Versatzmaßes und/oder Schrägstellungsmaßes verbessert werden.

Gemäß einer Ausführungsart weist das Flurförderzeug ein drittes Abstandsmessmittel auf, das an einer der Gabelzinken angeordnet ist und bevorzugt auf den Gabelzwischenraum oder nach außen gerichtet ist. Das dritte Abstandsmessmittel weist einen Abstand zur Gabelspitze der Gabelzinke auf, der größer als eine Länge der Palette ist. Das dritte Abstandsmessmittel ist also weiter weg von den Gabelspitzen befestigt als dies der Fall bei den ersten und zweiten Abstandsmessmitteln ist.

In weiteren Verfahrensschritten werden mehrere dritte Abstandmesswertes mit dem dritten Abstandsmessmittel zu dem äußeren Block, äußeren Steg, dem weiteren äußeren Block, dem weiteren äußeren Steg, Mittelblock oder -steg der Palette während der Einfahrt gemessen. Falls eine Veränderung der dritten Abstandmesswerte ermittelt wird, die mindestens einer Dicke des äußeren Blocks, äußeren Stegs, Mittelblocks oder -stegs entspricht, werden die Gabelzinken angehoben. Dazu werden die dritten Abstandsmesswerte, die zeitlich aufeinanderfolgend gemessen werden, jeweils miteinander verglichen. Wenn ein Unterschied zwischen zwei Abstandsmessungen ermittelt wird, der mindestens der Dicke des äußeren Blocks, äußeren Stegs, Mittelblocks oder -stegs entspricht, entspricht dies der Veränderung. Im Zuge des Einfahrvorgangs tritt sie dann auf, wenn der äußere Block, äußere Steg, Mittelbock oder -steg das dritten Abstandsmessmittel passiert und in der Folge dieses nicht mehr einen Abstand misst, der seinem Abstand zur Umgebung oder seinem Abstand zur gegenüberliegenden Gabelzinke entspricht, sondern einen Abstand misst, der dem Abstand zu dem äußeren Block, äußeren Steg, Mittelblock oder -steg entspricht und deutlich kleiner ist. Der Abstand ist aufgrund des passierenden äußeren Blocks, äußeren Stegs, Mittelblocks oder -stegs mindestens um dessen Dicke, üblicherweise aber noch deutlich mehr verringert.

Eine Veränderung der dritten Abstandsmesswerte, die mindestens der Dicke des äußeren Blocks, äußeren Stegs, Mittelblocks oder -stegs entspricht, zeigt im Verlaufe des Einfahrvorgangs an, dass der äußere Block, äußere Steg, Mittelblock oder -steg das dritte Abstandsmessmittel passiert hat. Dadurch, dass das dritte Abstandsmessmittel einen Abstand zu der Gabelspitze aufweist, der größer als die Länge der Palette ist, bedeutet dies auch, dass die Palette vollständig auf den Gabelzinken angeordnet ist. Erst wenn dies der Fall ist, kann die Palette sicher angehoben werden. Bei dieser Ausführungsart ist daher die Betriebssicherheit noch weiter gesteigert.

Gemäß einer weiteren Ausführungsart werden in einem zusätzlichen Verfahrensschritt zu einem Zeitpunkt, nachdem die Gabelzinken angehoben wurden, mehrere erste, zweite und/oder dritte Abstandsmesswerte ermittelt. Anschließend wird ermittelt, ob eine Veränderung der Abstandmesswerte ermittelt wird, die mindestens der Dicke des äußeren Blocks, äußeren Stegs, Mittelblocks oder -stegs entspricht. Dazu können die Abstandsmesswerte des ersten, zweiten und/oder dritten Abstandsmessmittels ausgewertet werden. Ob eine Veränderung ermittelt wird, die mindestens der Dicke des äußeren Blocks, äußeren Stegs, Mittelblock oder -stegs entspricht, läuft analog der Beschreibung zur vorhergehenden Ausführungsart ab. Falls eine Veränderung der Abstandmesswerte ermittelt wird, die mindestens einer Dicke des äußeren Blocks, äußeren Stegs, Mittelblocks oder -stegs entspricht, wird eine Bewegung des Flurförderzeugs gestoppt oder verhindert. Wenn eine solche Veränderung auftritt, bedeutet dies nämlich, dass die Palette verrutscht ist. Ein sicherer Weiterbetrieb ist dann nicht mehr möglich.

Gemäß einer weiteren Ausführungsart wird beim Berechnen des Versatzmaßes und/oder des Schrägstellungsmaßes der dritte Abstandsmesswert verwendet. Die entsprechenden Berechnungen laufen so ab, wie dies bei der Ausführungsart beschrieben wurde, gemäß der der zweite Abstandsmesswert zusätzlich zum Berechnen des Versatzmaßes und/oder des Schrägstellungsmaßes verwendet wird. Auch durch die Verwendung des dritten Abstandsmesswertes bei der Berechnung des Versatzmaßes und/oder Schrägstellungsmaßes wird die Genauigkeit des Verfahrens gesteigert.

Gemäß einer Ausführungsart wird zum Berechnen des Versatzmaßes von den Abstandsmesswerten jeweils ein entsprechender Sollwert abgezogen. Der Sollwert kann also insbesondere von den ersten, zweiten und/oder dritten Abstandsmesswerten abgezogen werden. Der Sollwert entspricht einem Abstand, bei dem die äußeren Blöcke oder Stege relativ zur den Gabelzinken wie gewünscht, bevorzugt im gleichen Abstand von diesen positioniert sind oder der Mittelblock oder -steg so wie gewünscht, bevorzugt mittig zwischen den Gabelzinken angeordnet ist. Sobald das Versatzmaß einen von Null verschiedenen Wert angibt, liegt eine Differenz zwischen gemessenem Abstandswert und Sollwert vor, wodurch darauf geschlossen werden kann, dass der die Gabelzinken nicht wie gewünscht positioniert ist. Durch die Verwendung von einem Sollwert kann einfach und schnell ermittelt werden, ob eine gewünschte Position der Palette relativ zu den Gabelzinken vorliegt.

Gemäß einer weiteren Ausführungsart weist das Flurförderzeug einen Gabelrücken, von dem die Gabelzinken abstehen, sowie ein viertes Abstandsmessmittel, das zum Messen eines Abstandes zwischen dem Gabelrücken und einer Palette ausgebildet ist, auf. Das vierte Abstandsmessmittel kann bevorzugt an dem Gabelrücken angeordnet sein.

In zusätzlichen Verfahrensschritten werden mehrere vierte Abstandmesswerte zwischen Gabelrücken und Palette mit dem vierten Abstandsmessmittel während der Einfahrt gemessen. Dadurch ist der Abstand der Palette, die später hochgehoben werden soll, zu dem Gabelrücken bekannt. Es werden die Gabelzinken nur angehoben, falls der zuletzt gemessene vierte Abstandsmesswert geringer als ein Aufnahmemaximalabstand ist. Der Aufnahmemaximalabstand gibt einen maximalen Abstand an, den die Palette zu dem Gabelrücken haben darf. Wenn dieser Abstand überschritten wird, befindet sich die Palette noch nicht ausreichend nahe an dem Gabelrücken und es könnte sein, dass die Palette noch nicht sicher angehoben werden kann. Dabei werden die Messungen mit dem vierten Abstandsmessmittel unabhängig von den Messungen mit den anderen Abstandsmessmitteln durchgeführt. Dadurch können die jeweiligen Abstandsmessmittel entsprechend einfach ausgeführt werden.

Bevorzugt werden vierte Abstandsmesswerte zu Zeitpunkten gemessen, an denen erste, zweite oder dritte Abstandsmesswerte gemessen werden. Bei der Berechnung des Schrägstellungsmaßes wird zudem eine Differenz zwischen jeweils zwei ersten, zweiten oder dritten Abstandsmesswerten durch die jeweilige Differenz der beiden vierten Abstandmesswerte geteilt, die zu den Zeitpunkten ermittelt wurden, an denen die jeweiligen ersten, zweiten oder dritten Abstandsmesswerte ermittelt wurden. Auf diese Weise werden relative Abstandsdifferenzen bei der Berechnung des Schrägstellungsmaßes verwendet, wobei der Bezug zur Berechnung der relativen Werte jeweils der Abstand ist, der zwischen den Fahrpositionen liegt, in denen sich das Flurförderzeug befand, als die jeweiligen ersten, zweiten oder dritten Abstandsmesswerte ermittelt wurden. Durch diesen Bezug auf den Fahrweg ist es möglich, durch Anwendung einfacher trigonometrischer Funktionen einen quantifizierbaren Winkel als Schrägstellungsmaß zu berechnen.

Gemäß einer weiteren Ausführungsart weist das Flurförderzeug ein Verfahrwegsmessmittel auf. Dieses ist dazu ausgebildet, einen Verfahrweg des Flurförderzeugs zu messen. Es handelt sich bevorzugt um ein Messmittel, das die Umdrehungen des Antriebsmotors oder des angetriebenen Rads misst. Ein solches Messmittel kann auch als Odometriemessmittel bezeichnet werden.

In einem zusätzlichen Verfahrensschritten wird ein Verfahrwegmesswert mit dem Verfahrwegsmessmittel während der Einfahrt gemessen. Dabei kann der Beginn der Einfahrt dadurch festgelegt sein, dass der äußere Block, äußere Steg, Mittelblock oder -steg das erste Abstandsmessmittel passiert. Dass der Mittelblock oder -steg das erste Abstandsmessmittel passiert hat, kann durch das erste Abstandsmessmittel ermittelt werden, wenn dieses eine Veränderung des ersten Abstandsmesswert feststellt, die mindestens so groß wie die Dicke des äußeren Blocks, äußeren Stegs, Mittelblocks oder -stegs ist.

Die Gabelzinken werden erst angehoben, falls der Verfahrwegmesswert größer als ein Verfahrwegsminimalwert ist. Der Verfahrwegsminimalwert entspricht dabei mindestens der Länge der Palette. Wenn der Verfahrweg mindestens dem Verfahrwegsminimalwert entspricht bedeutet dies, dass die Gabelzinken so weit in die Palette eingetaucht sind, dass sich die Palette vollständig auf den Gabelzinken befindet und angehoben werden kann. Das Messen des Verfahrwegs und Vergleichen mit einem Verfahrwegsminimalwert steigert auf diese Weise die Betriebssicherheit weiter.

Bevorzugt werden Verfahrwegmesswerte zu den Zeitpunkten gemessen, an denen erste, zweite oder dritte Abstandsmesswerte gemessen werden. Bei der Berechnung des Schrägstellungsmaßes wird zudem eine Differenz zwischen jeweils zwei ersten, zweiten oder dritten Abstandsmesswerten durch die jeweilige Differenz der beiden vierten Verfahrwegmesswerte geteilt, die zu den Zeitpunkten ermittelt wurden, an denen die jeweiligen ersten, zweiten oder dritten Abstandsmesswerte ermittelt wurden. Auch auf diese Weise ist es möglich, Winkel für die Berechnung des Schrägstellungsmaßes zu verwenden.

Ferner wird diese Ausführungsart bevorzugt mit den Ausführungsarten kombiniert, bei denen das dritte oder vierte Abstandsmessmittel vorhanden und in zusätzlichen Verfahrensschritten verwendet werden, um entsprechende Messungen durchzuführen, auf deren Basis darüber entschieden wird, ob die Palette angehoben werden kann. Durch eine solche Kombination der Ausführungsarten wird ermöglicht, dass redundante Messergebnisse vorliegen, die anzeigen, ob die Palette sicher angehoben werden kann. Dies kann insbesondere in Hinblick auf regulatorische Anforderungen nötig sein. Dabei kann bei Bedarf beispielsweise die Abstandsmessung mit dem vierten Sensor dazu dienen, eine Entscheidung über das Anheben zu treffen, während mit den restlichen Sensoren nur der Versatz und/oder Schrägstellung mit entsprechend hoher Genauigkeit und geringer Störungsanfälligkeit gemessen werden können.

Gemäß einer Ausführungsart sind die Messungen jeweils Teil einer kontinuierlichen Messung. Dazu werden die Abstandsmesswerte von den Abstandsmessmitteln durchgehend, d.h. ohne Unterbrechung, erfasst und ausgewertet, wobei bei der Verwendung von digitalen Abstandsmessmitteln auch eine in sehr kurzen zeitlichen Abständen durchgeführte Messung als durchgehend angesehen werden kann. Solch kurze Abstände können im Bereich von weniger als einer Sekunde bis hin zu Millisekunden liegen. Alternativ ist auch eine intermittierende Messung mit periodischen oder variierenden Messintervallen möglich.

Wenn kontinuierlich gemessen wird, stehen mehr Informationen über die Pose der Palette relativ zu dem Flurförderzeug zur Verfügung. Insbesondere stehen zu jedem Zeitpunkt entsprechende Informationen über das Versatzmaß und/oder das Schrägstellungsmaß zur Verfügung. Die Auswertung kann jederzeit durchgeführt werden. Das erlaubt, dass besonders schnell auf eine Veränderung reagiert werden kann. Das kann auch eine kontinuierliche Korrektur des Lenkwinkels des gelenkten Rads und/oder der Ansteuerung des Antriebsmotors umfassen. Auf diese Weise kann besonders effektiv ermöglicht werden, dass die Palette am Ende des Einfahrvorgangs mittig und gerade ausgerichtet ist.

Es kann durchgehend überwacht werden, ob eine Änderung der ersten, zweiten und/oder dritten Abstandsmesswerte auftritt, die der Dicke des äußeren Blocks, äußeren Stegs, Mittelblocks oder -stegs entspricht. Wie zuvor bereits erläutert, erlaubt eine solche Veränderung Rückschluss darauf, ob die Palette das entsprechende Abstandsmessmittel passiert hat bzw. zwischen diesem und der gegenüberliegenden Gabelzinke angeordnet ist.

Die der Erfindung zu Grunde liegende Aufgabe wird ebenfalls durch ein Flurförderzeug mit den Merkmalen aus Anspruch 11 gelöst. Das erfindungsgemäße Flurförderzeug weist ein Gabelzinkenpaar mit einer ersten sowie zweiten Gabelzinke und ein erstes Abstandsmessmittel auf, das im Bereich einer Gabelspitze an der ersten Gabelzinke angeordnet sowie bevorzugt auf den Gabelzwischenraum oder nach außen gerichtet ist. Ein erfindungsgemäßes Flurförderzeug weist eine Steuereinrichtung auf, die dazu eingerichtet ist, während einer Einfahrt des Flurförderzeugs in eine Palette, die einen äußeren Block, äußeren Steg, Mittelblock oder -steg aufweist, das Ermitteln von mehreren ersten Abstandmesswerten mit dem ersten Abstandsmessmittel zu dem äußeren Block, äußeren Steg, Mittelblock oder -steg zu veranlassen. Zudem ist die Steuereinrichtung dazu ausgebildet, ein Versatzmaß aus mindestens einem ersten Abstandsmesswerten und/oder ein Schrägstellungsmaß aus der Differenz von mindestens zwei ersten Abstandsmesswerten zu berechnen.

Mit dem erfindungsgemäßen Flurförderzeug kann das erfindungsgemäße Verfahren gemäß Anspruch 1 ausgeführt werden. Bereits zuvor wurde beschrieben, welche Besonderheiten, technischen Wirkungen und Vorteile mit dem erfindungsgemäßen Verfahren einhergehen. Diese Ausführungen gelten für das erfindungsgemäße Flurförderzeug ebenso. Dabei gilt insbesondere, dass durch das mit dem erfindungsgemäßen Flurförderzeug bestimmte Versatzmaß festgestellt werden kann, ob die Palette mittig auf den Gabelzinken angeordnet ist. Durch das Schrägstellungsmaß kann festgestellt werden, ob die Palette verdreht auf den Gabelzinken angeordnet ist. Basierend auf diesen Informationen kann eine Entscheidung über den weiteren Betrieb des Flurförderzeugs getroffen und so die Betriebssicherheit gesteigert werden.

Gemäß einer Ausführungsart weist das Flurförderzeug ein gelenktes Rad sowie einen Antriebsmotor auf. Die Steuereinrichtung ist dabei dazu eingerichtet, auf Grundlage des Versatzmaßes und/oder des Schrägstellungsmaßes eine Veränderung des Lenkwinkels des gelenkten Rads und/oder eine Ansteuerung des Antriebsmotors zu veranlassen. Wie bereits oben zu der entsprechenden Ausführungsart des Verfahrens beschrieben wurde, kann auch bei dieser Ausführungsart des erfindungsgemäßen Flurförderzeugs eine Korrektur beim Einfahrtvorgang basierend auf dem Abstandsmaß und/oder dem Schrägstellungsmaß vorgenommen werden. Das erlaubt, dass die Palette mittig und gerade ausgerichtet auf den Gabelzinken nach dem Einfahrvorgang angeordnet ist und sicher angehoben werden kann.

Gemäß einer weiteren Ausführungsart weist das Flurförderzeug ein zweites Abstandsmessmittel, das im Bereich einer Gabelspitze an der zweiten Gabelzinke angeordnet sowie auf den Gabelzwischenraum oder nach außen gerichtet ist. Zusätzlich oder alternativ weist es ein drittes Abstandsmessmittel, das an einer der Gabelzinken angeordnet sowie auf den Gabelzwischenraum oder nach außen gerichtet ist, auf. Zusätzlich oder alternativ zu dem zweiten und/oder dritten Abstandsmessmittel kann das Flurförderzeug dieser Ausführungsart auch einen Gabelrücken, von dem die Gabelzinken abstehen, mit einem daran angeordneten vierten Abstandsmessmittel, das zum Messen eines Abstandes zwischen dem Gabelrücken und einer Palette ausgebildet ist, aufweisen. Nach dieser Ausführungsart kann das Flurförderzeug alternativ oder ergänzend auch ein Verfahrwegsmessmittel aufweisen.

Abhängig davon, ob das Flurförderzeug ein zweites, drittes und/oder viertes Abstandsmessmittel und/oder ein Verfahrwegsmessmittel aufweist, ist die Steuereinrichtung dazu ausgebildet ist, das zweite, dritte und/oder vierte Messmittel zu einer Abstandsmessung und/oder das Verfahrwegsmessmittel zu einer Verfahrwegsmessung zu veranlassen und die dabei ermittelten Messwerte bei der Berechnung des Versatzmaßes und/oder Schrägstellungsmaßes zu berücksichtigen.

Ein Flurförderzeug gemäß dieser Ausführungsart ist dazu ausgebildet, ein Verfahren nach den Ansprüchen 3 bis 9 durchzuführen. Welche dieser Verfahren mit dem Flurförderzeug dieser Ausführungsart durchgeführt werden können, hängt insbesondere davon ab, welche Messmittel das Flurförderzeug aufweist. Es gelten demnach auch die bereits zu diesen Verfahren beschriebenen Besonderheiten, technischen Wirkungen und Vorteilen sinngemäß für ein entsprechendes Flurförderzeug.

Gemäß einer Ausführungsart sind das erste, zweite und/oder dritte Abstandsmessmittel jeweils als Lasersensor ausgebildet. Alterativ oder ergänzend ist das vierte Abstandsmessmittel als ein Lidar- oder Ultraschallsensor ausgebildet.

Lasersensoren können insbesondere so ausgebildet sein, dass sie entlang einer Gerade messen. Das ermöglicht, dass nachvollziehbar ist, wo auf dieser Geraden der Mittelbock oder -steg angeordnet ist, wenn ein Abstandsmesswert ermittelt wird. Das erlaubt eine genaue Bestimmung des Mittelblocks oder -stegs relativ zu dem jeweiligen Abstandsmessmittel. Dadurch kann insbesondere besonders genau bestimmt werden, wann der äußere Block, äußere Steg, Mittelblock oder -steg den jeweiligen Sensor passiert hat. Bei Kombination mit einer Messung des Verfahrwegs mit dem Verfahrwegsmessmittel kann die Position des Mittelblocks oder -stegs und somit der Palette besonders genau bestimmt werden.

Mit Lidar- oder Ultraschallsensoren kann zuverlässig der Abstand der Palette zu dem vierten Abstandsmessmittel ermittelt werden. Sie können sich insbesondere durch einen kegel- oder fächerförmigen Messbereich auszeichnen, der eine einfache Erfassung einer Palette im Umfeld des Flurförderzeugs ermöglicht.

Bevorzugt wird mit den Messmitteln kontinuierlich gemessen. Was in dieser Schrift in Bezug auf die genannten Messmittel unter kontinuierlich zu verstehen ist, wurde bereits oben erläutert und gilt sinngemäß für diese Ausführungsart des erfindungsgemäßen Flurförderzeuges ebenfalls, genauso wie die entsprechenden Wirkungen.

Die Erfindung wird im Folgenden näher anhand eines Ausführungsbeispiels erläutert, das in den anliegenden Zeichnungen dargestellt ist. Dabei zeigen:
- Fig. 1a:: eine schematische Ansicht eines Lastaufnahmemittels eines erfindungsgemäßen Flurförderzeuges und eine Palette;
- Fig. 1b:: eine schematische Ansicht einer Palette auf Gabelzinken eines erfindungsgemäßen Flurförderzeuges;
- Fig. 2a:: schematische Darstellungen von Abstandsmesswert-Verläufen bei mittiger Position und gerader Ausrichtung der Palette;
- Fig. 2b:: schematische Darstellung einer mittig auf den Gabelzinken platzierten Palette;
- Fig. 3a:: schematische Darstellungen von Abstandsmesswert-Verläufen bei Versatz der Palette;
- Fig. 3b:: schematische Darstellung einer versetzt auf den Gabelzinken platzierten Palette;
- Fig. 4:: schematische Darstellungen von Abstandsmesswert-Verläufen bei verdrehter Ausrichtung der Palette.

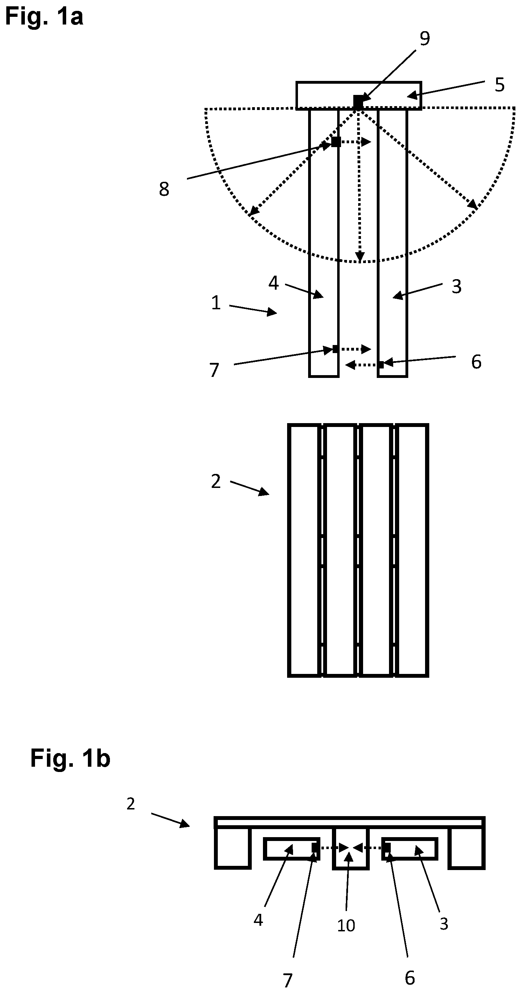

Fig. 1a zeigt eine schematische Ansicht eines Lastaufnahmemittels 1 eines erfindungsgemäßen Flurförderzeuges und eine Palette 2 von oben. Das Lastaufnahmemittel 1 verfügt über eine erste und zweite Gabelzinke 3, 4, die parallel angeordnet sind und von dem Gabelrücken 5 abstehen. An der ersten Gabelzinke 3 ist das erste Abstandsmessmittel 6 angeordnet, das auf den Zwischenraum zwischen den Gabelzinken 3, 4 gerichtet ist. An der zweiten Gabelzinke 4 ist das zweite Abstandsmessmittel 7 angeordnet, das auf den Zwischenraum zwischen den Gabelzinken 3, 4 gerichtet ist. Das erste und zweite Abstandsmessmittel 6, 7 sind jeweils im Bereich der Gabelspitzen angeordnet, d.h. in einem relativ großen Abstand zum Gabelrücken 5. An der zweiten Gabelzinke 4 ist neben dem zweiten Abstandsmessmittel 7 auch noch ein drittes Abstandsmessmittel 8 angeordnet, das ebenfalls auf den Zwischenraum zwischen den Gabelzinken 3, 4 gerichtet ist. Das dritte Abstandsmessmittel 8 ist im Bereich des Gabelrückens 5 angeordnet. Die drei Abstandsmessmittel 6, 7, 8 sind als Lasersensoren ausgebildet, die entlang einer Geraden messen, was jeweils durch die gestrichelten Pfeile angedeutet ist. Aus der Ausrichtung der Pfeile ist zu erkennen, dass die Messbereiche senkrecht zu den Gabelzinken 3, 4 ausgerichtet sind. Am Gabelrücken 5 ist auch noch ein viertes Abstandsmessmittel 9 angeordnet, welches als Lidar-Sensor ausgeprägt ist und dementsprechend über einen fächerförmigen Messbereich verfügt, der ebenfalls durch gestrichelte Linien dargestellt ist und den Bereich im Vorfeld der Gabelzinken 3, 4 erfasst. Bei einer Annäherung des Flurförderzeuges an die Palette 2 ist das vierte Abstandsmessmittel 9 dazu in der Lage, den Abstand zwischen dem Gabelrücken 5 und der Palette 2 zu ermitteln.

Fig. 1b zeigt eine schematische Ansicht der Palette 2 auf den Gabelzinken 3, 4 von vorne. Aus der Ansicht ist erkennbar, dass die Palette über einen Mittelblock 10 verfügt, der mittig an der Palette angeordnet ist. Nachdem ein Einfahrvorgang abgeschlossen wurde, befinden sich die Gabelzinken 3 und 4 neben dem Mittelblock 10. Das erste und zweite Abstandsmessmittel 3, 4 erfassen dann einen deutlich kürzen Abstandsmesswert, weil sie nicht mehr den Abstand zu der jeweils gegenüberliegenden Gabelzinke 3, 4 messen, sondern zu dem dazwischen angeordneten Mittelblock 10.

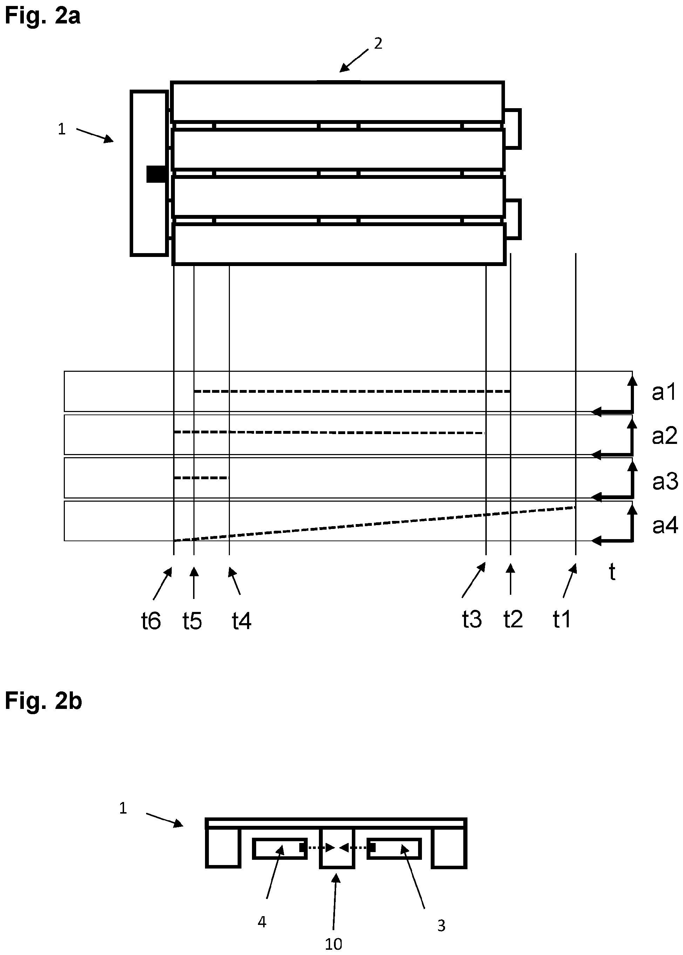

Fig. 2a zeigt schematische Darstellungen von Abstandsmesswert-Verläufen bei mittiger Position und gerader Ausrichtung der Palette 2. Für jedes der vier Abstandsmessmittel 6, 7, 8, 9 ist ein Diagramm dargestellt, das auf einer vertikalen Achse den jeweilig gemessenen Abstandsmesswert a1 - a4 darstellt und auf der horizontalen Achse die Zeit t. Dabei beschreibt die Zeit t einen Einfahrvorgang, bei dem zu Beginn die Palette 2 noch nicht auf dem Lastaufnahmemittel 1 angeordnet ist und an dessen Ende die Palette 2 so auf dem Lastaufnahmemittel 1 angeordnet ist, wie es in der Fig. 2a dargestellt ist.

Im Laufe des Einfahrvorgangs nähert sich das Flurförderzeug mit seinem Lastaufnahmemittel 1 der Palette 2 immer weiter an, wobei es eine konstante Geschwindigkeit aufweist. Dies ist durch den gestrichelt dargestellten Abstandsmesswert a4 verdeutlicht, der über die Zeit t konstant abnimmt, wobei das vierte Abstandsmessmittel 9 ab dem Zeitpunkt t1 die Palette registriert. Ab dem Zeitpunkt t2 passiert der Mittelblock 10 das erste Abstandsmessmittel 6, dessen Abstandsmesswert a1 sogleich auf einen mittleren Wert springt. Ab dem Zeitpunkt t3 passiert selbiges das zweite Abstandsmessmittel 7 und ab dem Zeitpunkt t4 auch das dritte Abstandsmessmittel 8. Ab dem Zeitpunkt t5 ist die Palette bereits so nah an dem Gabelrücken 5 angelangt, dass das erste Abstandsmessmittel wieder einen sehr hohen Abstandsmesswert misst, der dem Abstand zur gegenüberliegenden Gabelzinke 4 entspricht und außerhalb des dargestellten Messbereichs liegt. Zum Zeitpunkt t6 ist die Palette 2 dann so nah an den Gabelrücken 5 herangerückt, dass der entsprechend auf das untere Ende der Skala abgefallene Abstandsmesswert a4 anzeigt, dass der Maximalabstand zwischen Gabelrücken 5 und Palette 2, der für eine sichere Aufnahme nicht überschritten sein darf, erreicht wurde. Die Palette kann nun angehoben werden.

Es ist auffällig, dass die Verläufe der Abstandsmesswerte a1 - a3 parallel zur horizontalen Achse der Diagramme ausgerichtet sind. Dies ist durch die mittige Ausrichtung der Palette 2 relativ zu den Gabelzinken 3, 4 bedingt. Fig. 2b zeigt dies in einer schematischen Darstellung, wobei die mittig auf den Gabelzinken 3, 4 platzierte Palette 2, bei der der Mittelblock 10 genau zwischen den Gabelzinken 3, 4 angeordnet ist, gut ersichtlich ist.

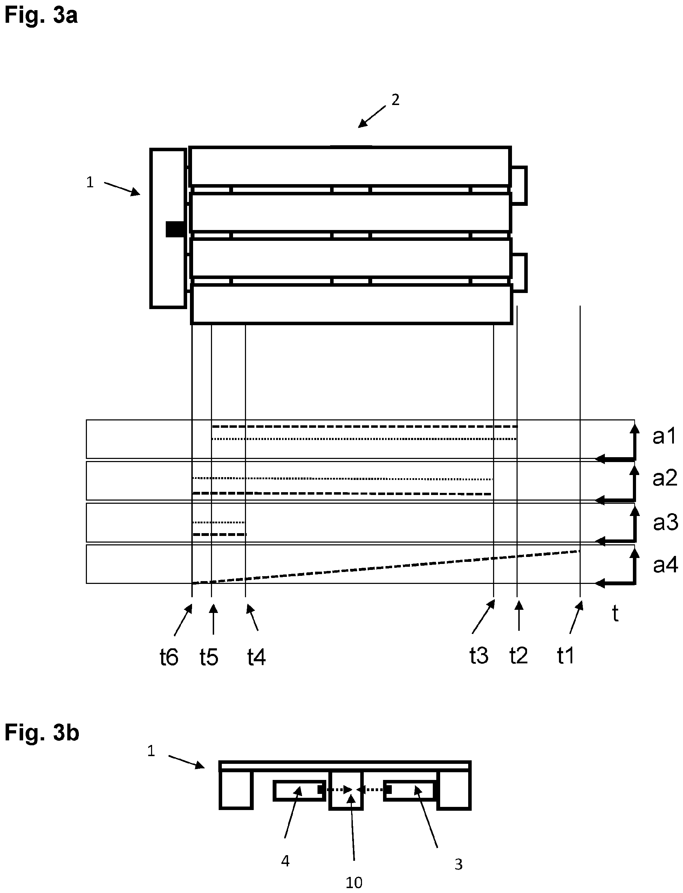

Fig. 3a zeigt schematische Darstellungen von Abstandsmesswert-Verläufen bei Versatz der Palette. Die Darstellung der Abstandsmesswerte a1 - a4 entspricht der aus Fig 2a. Allerdings befindet sich bei dem in dieser Figur dargestellten Einfahrvorgang die Palette 2 nicht mittig auf den Gabelzinken 3, 4 nachdem der Einfahrvorgang abgeschlossen ist. Vielmehr weist er einen Versatz auf, sodass sich der Mittelblock 10 näher an der zweiten Gabelzinke 4 befindet als an der ersten Gabelzinke 3, wie aus Fig. 3 b ersichtlich ist. Aus diesem Grund misst das erste Abstandsmessmittel 6 durchgehend einen größeren Abstandsmesswert a1 als in dem in Fig. 2a dargestellten, mittigen Fall, wobei der Abstandsmesswert a1 des mittigen Falls zum Vergleich in einer dünneren Liniendicke ebenfalls dargestellt ist. Selbiges gilt auch für das zweite und dritte Abstandsmessmittel 7, 8 entsprechend. Aufgrund der Tatsache, dass sich die Abstandsmesswerte a1 - a3 in dem in dieser Figur dargestellten Fall von den zuvor dargestellten Abstandsmesswertverläufen unterscheiden, kann ermittelt werden, dass die Palette einen Versatz aufweist.

Indem beispielsweise ein Mittelwert der aufgezeichneten Abstandsmesswerte a1 - a3 eines jeweiligen Sensors gebildet wird, kann ein Versatzmaß bestimmt werden, das zum Ausdruck bringt, dass ein Versatz vorliegt. Auch Einzelwerte können für das Versatzmaß unter Billigung einer abnehmenden Genauigkeit in Kauf genommen werden. Ebenfalls können die Abstandsmesswerte a1 - a 3 gemeinsam ausgewertet werden. Dazu kann jeweils die Differenz zu den dünn dargestellten Werten einer mittig angeordneten Palette zuerst abgezogen und anschließend eine Mittelung durchgeführt werden. So ist auch eine quantitative Bestimmung des Versatzes möglich. Dabei können die Abstandsmesswerteverläufe des mittigen Falls als Sollwerte betrachtet werden.

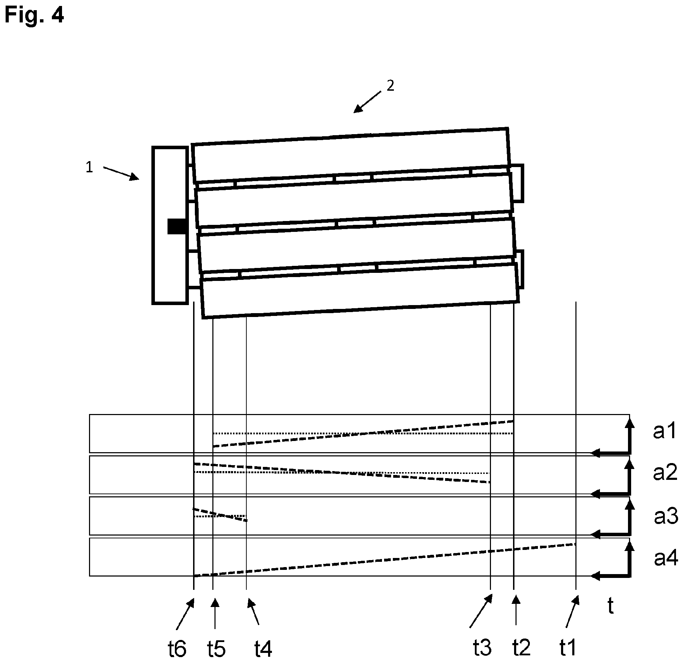

Fig. 4 zeigt schematische Darstellungen von Abstandsmesswert-Verläufen bei relativ zum Flurförderzeug verdrehter Ausrichtung der Palette 2. Erneut sind zur Referenz die Verläufe gemäß des mittig positionierten und gerade ausgerichteten Sollfalls in dünnerer Strichstärke vermerkt. Die dargestellten Abstandsmesswerte a1 bis a3 verdeutlichen, dass im Laufe des Einfahrvorgangs jeweils eine Veränderung der aufgezeichneten Abstandsmesswerte a1 - a3 stattfindet. Bedingt durch die Schrägstellung der Palette 2 befindet sich der Mittelblock 10 zu Beginn der Einfahrt nahe dem ersten Abstandsmessmittel 6 und am Ende weiter von diesem entfernt, was aus dem fallenden Verlauf des ersten Abstandsmesswertes a1 ersichtlich ist. Die auf der zweiten Gabelzinke 5 angeordneten zweiten und dritten Abstandsmessmittel 7, 8 hingegen weisen einen steigenden Verlauf der Abstandsmesswerte a2, a3 aufgrund der Schrägstellung auf.

Es kann ein Schrägstellungsmaß berechnet werden, das die Schrägstellung der Palette 2 in Relation zum Lastaufnahmemittel 1 angibt, indem die Differenz zwischen zwei zu unterschiedlichen Zeiten t aufgenommenen Abstandsmesswerten a1, a2, a3 desselben Abstandsmessmittels 6, 7, 8 berechnet wird. So ermittelte Differenzen können auch betragsmäßig addiert werden oder es kann der Mittelwert gebildet werden, um eine genauere Angabe des Schrägstellungsmaßes zu erhalten.

Im vorliegenden Ausführungsbeispiel wurden kontinuierliche Messungen durchgeführt, bei denen nicht nur zu diskreten Zeitpunkten gemessen wurde, sondern durchgehend bzw. in so kurzen Abständen, dass dies für die Darstellung unerheblich ist. Dann ist es auch möglich, die jeweiligen Verläufe der Veränderung, d.h. der zeitlichen Ableitungen der Abstandsmesswerte a1 - a3 zu berechnen und beispielsweise durch Mittelwertbildung auszuwerten, um das Schrägstellungsmaß zu bestimmen.

### Bezugszeichen:

- 1: Lastaufnahmemittel
- 2: Palette
- 3: Erste Gabelzinke
- 4: Zweite Gabelzinke
- 5: Gabelrücken
- 6: Erstes Abstandsmessmittel
- 7: Zweites Abstandsmessmittel
- 8: Drittes Abstandsmessmittel
- 9: Viertes Abstandsmessmittel
- 10: Mittelblock
- a1: Erster Abstandsmesswert
- a2: Zweiter Abstandsmesswert
- a3: Dritter Abstandsmesswert
- a4: Vierter Abstandsmesswert
- t: Zeit

## Patentansprüche

1. Verfahren zur Bestimmung der Pose einer Palette (2) relativ zu einem Flurförderzeug, das ein Gabelzinkenpaar mit einer ersten sowie zweiten Gabelzinke (3, 4) und ein erstes Abstandsmessmittel (6) aufweist, das im Bereich einer Gabelspitze an der ersten Gabelzinke (3) angeordnet sowie bevorzugt auf einen Gabelzwischenraum gerichtet ist, wobei die Palette (2) einen äußeren Block, äußeren Steg, Mittelblock (10) oder -steg aufweist,
**gekennzeichnet durch** die Schritte
• Einfahren des Flurförderzeugs in die Palette (2), sodass die erste sowie zweite Gabelzinke (3, 4) in die Palette (2) eintauchen,
• Ermitteln von mehreren ersten Abstandsmesswerten (a1) mit dem ersten Abstandsmessmittel (6) zu dem äußeren Block, äußeren Steg, Mittelblock (10) oder -steg der Palette (2) während der Einfahrt,
• Berechnen eines Versatzmaßes aus mindestens einem ersten Abstandsmesswert (a1) und/oder eines Schrägstellungsmaßes aus der Differenz von mindestens zwei ersten Abstandsmesswerten (a1).

2. Verfahren nach Anspruch 1, **dadurch gekennzeichnet, dass** das Flurförderzeug ein gelenktes Rad sowie einen Antriebsmotor aufweist und in einem zusätzlichen Verfahrensschritt auf Grundlage des Versatzmaßes und/oder des Schrägstellungsmaßes ein Lenkwinkel des gelenkten Rads und/oder eine Ansteuerung des Antriebsmotors verändert wird, so dass die Gabelzinken sich nach dem Einfahrvorgang mittig und gerade ausgerichtet relativ zu der Palette befinden.

3. Verfahren nach Anspruch 1 oder Anspruch 2, **dadurch gekennzeichnet, dass**
• das Flurförderzeug ein zweites Abstandsmessmittel (7) aufweist, das im Bereich einer Gabelspitze der zweiten Gabelzinke (4) angeordnet sowie bevorzugt auf den Gabelzwischenraum oder nach außen gerichtet ist,
• mehrere zweite Abstandmesswerte (a2) mit dem zweiten Abstandsmessmittel (7) zu dem äußeren Block, äußeren Steg, Mittelblock (10) oder- steg der Palette (2) während der Einfahrt in einem zusätzlichen Verfahrensschritt gemessen werden und
• beim Berechnen des Versatzmaßes und/oder des Schrägstellungsmaßes die zweiten Abstandsmesswerte (a2) verwendet werden.

4. Verfahren nach einem der vorherigen Ansprüche, **dadurch gekennzeichnet, dass**
• das Flurförderzeug ein drittes Abstandsmessmittel (8) aufweist, das an einer der Gabelzinken (3, 4) angeordnet ist, bevorzugt auf den Gabelzwischenraum oder nach außen gerichtet ist und einen Abstand zur Gabelspitze der Gabelzinke (3, 4) aufweist, der größer als eine Länge der Palette (2) ist, und in weiteren Verfahrensschritten
• mehrere dritte Abstandmesswert (a3) mit dem dritten Abstandsmessmittel (8) zu dem äußeren Block, äußeren Steg, Mittelblock (10) oder -steg der Palette (2) während der Einfahrt gemessen werden und
• die Gabelzinken angehoben werden, falls eine Veränderung der dritten Abstandsmesswerte (a3) ermittelt wird, die mindestens einer Dicke des Mittelblocks (10) oder -stegs entspricht.

5. Verfahren nach Anspruch 4, **dadurch gekennzeichnet, dass** in zusätzlichen Verfahrensschritten
• zu einem Zeitpunkt, nachdem die Gabelzinken (3, 4) angehoben wurden, mehrere erste, zweite und/oder dritte Abstandsmesswerte (a1, a2, a3) mit dem ersten, zweiten und/oder dritten Abstandsmessmittel ermittelt werden und
• eine Bewegung des Flurförderzeugs gestoppt oder verhindert wird, falls eine Veränderung der Abstandsmesswerte (a1, a2, a3) ermittelt wird, die mindestens der Dicke des äußeren Blocks, äußeren Stegs, Mittelblocks (10) oder -stegs entspricht.

6. Verfahren nach Anspruch 4 oder Anspruch 5, **dadurch gekennzeichnet, dass** beim Berechnen des Versatzmaßes und/oder des Schrägstellungsmaßes der dritte Abstandsmesswert (a3) verwendet wird.

7. Verfahren nach einem der vorherigen Ansprüche, **dadurch gekennzeichnet, dass** zum Berechnen des Versatzmaßes von den Abstandsmesswerten jeweils ein entsprechender Sollwert abgezogen wird.

8. Verfahren nach einem der vorherigen Ansprüche, **dadurch gekennzeichnet, dass** das Flurförderzeug einen Gabelrücken (5), von dem die Gabelzinken abstehen, sowie ein viertes Abstandsmessmittel (9) aufweist, das zum Messen eines Abstandes zwischen dem Gabelrücken und einer Palette (2) ausgebildet ist, und in zusätzlichen Verfahrensschritten
• mehrere vierte Abstandsmesswerte (a4) zwischen Gabelrücken (5) und Palette (2) mit dem vierten Abstandsmessmittel (9) während der Einfahrt gemessen werden und
• die Gabelzinken angehoben werden, falls der zuletzt gemessene vierte Abstandsmesswert (a4) geringer als ein Aufnahmemaximalabstand ist.

9. Verfahren nach einem der vorherigen Ansprüche, **dadurch gekennzeichnet, dass** das Flurförderzeug ein Verfahrwegsmessmittel aufweist und in zusätzlichen Verfahrensschritten
• ein Verfahrwegsmesswert mit dem Verfahrwegsmessmittel während der Einfahrt gemessen wird und
• die Gabelzinken angehoben werden, falls der Verfahrwegsmesswert größer als ein Verfahrwegsminimalwert ist.

10. Verfahren nach einem der vorherigen Ansprüche, **dadurch gekennzeichnet, dass** die Messungen jeweils Teil einer kontinuierlichen Messung sind.

11. Flurförderzeug, das ein Gabelzinkenpaar mit einer ersten sowie zweiten Gabelzinke (3, 4) und ein erstes Abstandsmessmittel (6) aufweist, das im Bereich einer Gabelspitze an der ersten Gabelzinke (3) angeordnet sowie bevorzugt auf den Gabelzwischenraum oder nach außen gerichtet ist,
**gekennzeichnet durch** eine Steuereinrichtung, die dazu eingerichtet ist,
• während einer Einfahrt des Flurförderzeugs in eine Palette (2), die einen äußeren Block, äußeren Steg, Mittelblock (10) oder -steg aufweist, das Ermitteln von mehreren ersten Abstandmesswerten (a1) mit dem ersten Abstandsmessmittel (6) zu dem äußeren Block, äußeren Steg, Mittelblock (10) oder -steg zu veranlassen, und
• ein Versatzmaßes aus mindestens einem ersten Abstandsmesswert (a1) und/oder ein Schrägstellungsmaß aus der Differenz von mindestens zwei ersten Abstandsmesswerten (a1) zu berechnen.

12. Flurförderzeug nach Anspruch 12, **dadurch gekennzeichnet, dass** das Flurförderzeug ein gelenktes Rad sowie einen Antriebsmotor aufweist, wobei die Steuereinrichtung dazu eingerichtet ist, auf Grundlage des Versatzmaßes und/oder des Schrägstellungsmaßes eine Veränderung des Lenkwinkels des gelenkten Rads und/oder eine Ansteuerung des Antriebsmotors zu veranlassen.

13. Flurförderzeug nach Anspruch 11 oder 12, **dadurch gekennzeichnet, dass** das Flurförderzeug
• ein zweites Abstandsmessmittel (7), das im Bereich einer Gabelspitze an der zweiten Gabelzinke (4) angeordnet sowie bevorzugt auf den Gabelzwischenraum oder nach außen gerichtet ist,
• ein drittes Abstandsmessmittel (8), das an einer der Gabelzinken angeordnet sowie bevorzugt auf den Gabelzwischenraum oder nach außen gerichtet ist,
• einen Gabelrücken (5), von dem die Gabelzinken (3, 4) abstehen, mit einem daran angeordneten vierten Abstandsmessmittel (9), das zum Messen eines Abstandes zwischen dem Gabelrücken und einer Palette (2) ausgebildet ist, und/oder
• ein Verfahrwegsmessmittel aufweist,
• wobei die Steuereinrichtung dazu ausgebildet ist, das zweite, dritte und/oder vierte Abstandsmessmittel (7, 8, 9) zu einer Abstandsmessung und/oder das Verfahrwegsmessmittel zu einer Verfahrwegsmessung zu veranlassen und die dabei ermittelten Messwerte bei der Berechnung des Versatzmaßes und/oder Schrägstellungsmaßes zu berücksichtigen.

14. Flurförderzeug nach einem der Ansprüche 11 bis 13, **dadurch gekennzeichnet, dass** das erste, zweite und/oder dritte Abstandsmessmittel (6, 7, 8) jeweils als ein Lasersensor ausgebildet sind und/oder das vierte Abstandsmessmittel (9) als ein Lidar- oder Ultraschallsensor ausgebildet ist.
